# EUROPEAN PATENT SPECIFICATION

(11) **EP 4 148 658 B1**
(45) Date of publication and mention of the grant of the patent: **16.09.2026**
(21) Application number: 22185424.3
(22) Date of filing: 18.07.2022
(51) Int. Cl.: G06T 3/4061

(54) **METHOD AND SYSTEM FOR SUPER-RESOLUTION RECONSTRUCTION OF HETEROGENEOUS STEREOSCOPIC IMAGES**
VERFAHREN UND SYSTEM ZUR SUPERAUFLÖSUNGS-REKONSTRUKTION VON HETEROGENEN STEREOSKOPISCHEN BILDERN
PROCÉDÉ ET SYSTÈME DE RECONSTRUCTION EN SUPER-RÉSOLUTION D'IMAGES STÉRÉOSCOPIQUES HÉTÉROGÈNES

(30) Priority: 28.07.2021 CN 202110855912
(43) Date of publication of application: 15.03.2023
(73) Proprietor: Guodian Nanjing Automation Co., LTD., 210009 Nanjing City Jiangsu (CN)
(72) Inventor: Bing, Fan, Nanjing City, Jiangsu Province (CN); Peng, Li, Nanjing City, Jiangsu Province (CN); Shu, Jin, Nanjing City, Jiangsu Province (CN); Yuanyuan, Wang, Nanjing City, Jiangsu Province (CN)
(74) Representative: Miller, Ronald Anthony

(56) References cited:
- US-A1- 2019 392 555
- ZHENGDONG ZHANG ET AL: "FAST: Free Adaptive Super-Resolution via Transfer for Compressed Videos", ARXIV.ORG, CORNELL UNIVERSITY LIBRARY, 201 OLIN LIBRARY CORNELL UNIVERSITY ITHACA, NY 14853, 29 March 2016 (2016-03-29), XP080688976
- MITRA BASU: "Gaussian-Based Edge-Detection Methods-A Survey", IEEE TRANSACTIONS ON SYSTEMS, MAN, AND CYBERNETICS: PART C:APPLICATIONS AND REVIEWS, IEEE SERVICE CENTER, PISCATAWAY, NJ, US, vol. 32, no. 3, 1 August 2002 (2002-08-01), XP011080053, ISSN: 1094-6977
- HYUNWOO KIM ET AL: "Edge-enhancing super-resolution using anisotropic diffusion", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 3, 7 October 2001 (2001-10-07), pages 130 - 133, XP010563300, ISBN: 978-0-7803-6725-8, DOI: 10.1109/ICIP.2001.958068
- KAMAL NASROLLAHI ET AL: "Super-resolution: a comprehensive survey", MACHINE VISION AND APPLICATIONS, vol. 25, no. 6, 1 August 2014 (2014-08-01), pages 1423 - 1468, XP055193477, ISSN: 0932-8092, DOI: 10.1007/s00138-014-0623-4
- CHEN KUO ET AL: "Fast image super-resolution for a dual-resolution camera", vol. 22, no. 3, 2 April 2015 (2015-04-02), JP, pages 434 - 442, XP093018621, ISSN: 1340-6000, Retrieved from the Internet <URL:http://link.springer.com/article/10.1007/s10043-015-0077-6/fulltext.html> DOI: 10.1007/s10043-015-0077-6

## Description

### FIELD OF INVENTION

The invention relates to a super-resolution reconstruction method and system for heterogeneous stereoscopic images and belongs to the technical field of computer vision.

### BACKGROUND

The task of computer vision is to develop computers and robots with the same visual ability as humans. Stereo vision is an important research field of computer technology. Compared with sonar and laser, binocular stereoscopic vision can provide rich scene color information and three-dimensional coordinate information, so that the research method based on geometric information and the research method based on visual feature points can be combined. A three-dimensional scene or model can be reconstructed by using this means. Binocular stereoscopicvision draws on the "parallax" principle of the human eyes. In other words, there are differences in the observation of an object in the real world between the left and right eyes. The human brain uses the difference between the left and right eyes to recognize the distance between objects and eyes. The observed difference between the left and right eye is called parallax in stereoscopic vision technology. Images from different perspectives are acquired by observing an object from different points. The three-dimensional information of the object is acquired by calculating the offset between pixels through the principle of triangulation according to the matching relationship of pixels between the images. Once the depth of field information of the object is given, the actual distance between the object and the camera and the actual size of the object can be calculated.

Given the advantages of binocularstereoscopic vision, low cost, high precision, and immersive environmental information, it is most widely used in the field of security monitoring in public transportation scenarios, such as airports, bus stations, and subway stations. In the field of security monitoring, cameras usually work continuously for 24 hours, and the storage space and transmission bandwidth required for binocular images are twice that of ordinary single-channel images. Therefore, there are higher requirements for the storage method of the image. In order to reduce the transmission and storage costs of stereoscopic images, an asymmetric compression method is often used to compress stereoscopic images, that is, two images are encoded with different resolutions or different qualities. However, this leads to heterogeneity between the two images, which brings great difficulties to subsequent 3D reconstruction and other information fusion work using stereo images.

To make both images the same quality, image super-resolution reconstruction algorithms can be employed to restore details in low-resolution images. Super-resolution reconstruction is another research topic in the field of computer vision and is widely used in pedestrian detection, video surveillance, and remote sensing image processing. However, directly using the single-image super-resolution reconstruction algorithm to process stereo images will destroy the connection between the left and right views. Therefore, it is of great theoretical and practical significance to explore the super-resolution reconstruction algorithm of stereo images. For an example of super-resolution processing see US 2019/392555 A1.

### SUMMARY OF INVENTION

The technical problem to be solved by the present invention is to overcome the defects of the state-of-the-art and to provide a super-resolution reconstruction method and system for heterogeneous stereoscopic images, which can utilize the spatial relation and viewpoint relation of heterogeneous stereoscopic images to reconstruct images from high-resolution images. The corresponding sub-block of the low-resolution view can be gained from the high-resolution view. Hence, heterogeneity between heterogeneous stereoscopic images can be compensated efficiently. This system and method are not limited to a specific image compression method. They have good robustness and universality and do not need a lot of time spent on training the weights and offsets of convolutional neural networks.

To solve the above technical problems, the present invention provides a super-resolution reconstruction approach for heterogeneous stereoscopic images as set out in the appended claims. Roughly speaking, a corresponding method comprises:
acquire a stereoscopic image pair at a certain moment compressed by an asymmetric compression method in the binocular vision system. The heterogeneous stereoscopic image pair includes two views, one of which is a high-resolution image, and the other is a low-resolution image;
narrow the search area of the high-resolution image and the search area of the low-resolution image;
determine the high-frequency information of the high-resolution image from the search region of the high-resolution image and the high-frequency information of the low-resolution image from the search region of the low-resolution image, respectively;
paste the high-frequency information of the high-resolution image to the high-frequency information of the low-resolution image through parametric transformation.

Further, the search area of the high-resolution image and the search area of the low-resolution image are narrowed by using an edge detection method, which includes:
convovle the high-resolution image and the low-resolution image with a Gaussian filter to obtain a denoised high-resolution image and a denoised low-resolution image;
calculate the raw edges of the high-resolution image and the low-resolution image according to the gradient strength G and the direction*θ* of the denoised high-resolution image and the gradient strength G and the direction *θ* of the denoised low-resolution image respectively;
use the non-maximum suppression method to sparse the raw edges of the high-resolution image and the raw edges of the low-resolution image to obtain the sparsed edges thereof;
suppress the weak pixels of the sparsed edges according to the preset high and low thresholds to obtain ideal edges and determine the search area of the high-resolution image and the search area of the low-resolution image according to the ideal edges, respectively.

Further, the selective patch processing method is used to determine the high-frequency information of the high-resolution image and the high-frequency information of the low-resolution image respectively from the search areas of the high-resolution image and the low-resolution image, wherein it comprises:
divide the search area of the high-resolution image and the corresponding area of the low-resolution image that matches the search area of the high-resolution image into N sub-blocks, ${\left\{{s}_{i}\right\}}_{i = 1}^{N}$ and ${\left\{{t}_{i}\right\}}_{i = 1}^{N}$, respectively;
use five gradient operators to extract gradient feature vectors of each sub-block, *sᵢ*and *tᵢ*; wherein the five gradient operators are expressed as: ${f}_{1} = \left[-1,0,1\right]$ ${f}_{2} = {f}_{1}^{T}$ ${f}_{3} = \left[1,0,-2,0,1\right]$ ${f}_{4} = {f}_{3}^{T}$ ${f}_{5} = \left[1,0,-1;-1,0,1\right]$
the gradient feature vectors extracted by the five gradient operators are denoted as *fₓ*, *f_{y}, fxx, f_{yy}*, and f*_{xy}*;
calculate the feature differences *Dᵢ* of the sub-blocks according to the extracted gradient feature vectors; the feature difference *Dᵢ* is given by: ${D}_{i} = \left|\left|{f}_{i}^{ε}\right|-\left|{f}_{i}^{η}\right|\right|$ where ${f}^{ε} = \frac{{{f}_{x}}^{2} {f}_{xx} + 2 {f}_{x} {f}_{y} {f}_{xy} + {{f}_{y}}^{2} {f}_{yy}}{{{f}_{x}}^{2} + {{f}_{y}}^{2}}$ ${f}^{η} = \frac{{{f}_{y}}^{2} {f}_{xx} + 2 {f}_{x} {f}_{y} {f}_{xy} + {{f}_{x}}^{2} {f}_{yy}}{{{f}_{x}}^{2} + {{f}_{y}}^{2}}$
arrange all the feature differences in the order of size to obtain a sequence; the sub-block corresponding to the feature difference in the middle position of the sequence is the sub-block of high-frequency information.

Further, the high-frequency information of the high-resolution image is pasted to the high-frequency information of the low-resolution image through a parametric transformation, including:
acquire cost function which is given by: $\left({t}_{i}, {s}_{i}\right) = {argmin}_{{t}_{i} , {s}_{i}} {\sum }_{i ∈ ℧} {E}_{u} \left({t}_{i}, {s}_{i}, {T}_{i}\right)$ *Tᵢ* is the transformation parameter; 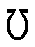 is the index of the stereoscopic image pair. *Eᵤ*(**t***ᵢ,***s***ᵢ,Hᵢ*) denotes the Euclidean distance, which can be represented by: ${E}_{u} \left({t}_{i}, {s}_{i}, {T}_{i}\right) = {\left‖P\left({t}_{i}\right)-S\left({s}_{i}, {T}_{i}\right)\right‖}_{2}^{2}$ where *P*(**t***ᵢ*) is the intensity of the sub-block **t***ᵢ* in low-resolution image. *S*(**s***ᵢ,Tᵢ*) is the intensity of the sub-block **s***ᵢ* in high resolution image;
calculate the transformation parameter *Tᵢ* according to the cost function, which comprises:
   acquire the isomorphic map **H***_{mᵢ}* for rectifying the planes in the image, wherein the three vectors of **H***_{mᵢ}* are denoted as **h**₁,**h**₂,**h**₃. The target sub-block ${t}_{i}^{′}$ in the low-resolution image and the rectified source sub-block ${s}_{i}^{′}$ in the high-resolution image are denoted as ${t}_{i}^{′} = {\left[{h}_{1}{t}_{i},{h}_{2}{t}_{i},{h}_{3}{t}_{i}\right]}^{T}$ ${s}_{i}^{′} = {\left[{h}_{1}{s}_{i},{h}_{2}{s}_{i},{h}_{3}{s}_{i}\right]}^{T}$
   assume (*d^{x}*,*d^{y}*) is the displacement vector of the rectified source sub-block ${s}_{i}^{′}$ from the target space to the rectified space; the rectified source sub-block ${s}_{i}^{′}$ is expressed by ${s}_{i}^{′} = \left[\begin{matrix}{h}_{1} + {h}_{3} {d}^{x} \\ {h}_{2} + {h}_{3} {d}^{x} \\ {h}_{3}\end{matrix}\right] {t}_{i}$ the source sub-block **s***ᵢ* in the high resolution image is represented by ${s}_{i} = {H}_{{m}_{i}}^{- 1} {s}_{i}^{′} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right] {t}_{i}$ *Tᵢ* is denoted by ${T}_{i} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right]$
   and paste the high-frequency information of the high-resolution image to the high-frequency information of the low-resolution image according to the transformation parameter *Tᵢ*.

A super-resolution reconstruction system of heterogeneous stereoscopic images, wherein it comprises:
an acquisition module configured to acquire a stereoscopic image pair at a certain moment compressed by an asymmetric compression method in a binocular vision system. The stereoscopic image pair includes two views, one of which is a high-resolution image and the other is a low-resolution image.
a narrowing module configured to narrow the search area of a high-resolution image and the search area of a low-resolution image.
a determination module configured to determine the high-frequency information of the high-resolution image from the search region of the high-resolution image and the high-frequency information of the low-resolution image from the search region of the low-resolution image, respectively.
a processing module configured to paste the high-frequency information of the high-resolution image to the high-frequency information of the low-resolution image through parameter transformation.

Further, the narrowing module uses edge detection to narrow the search area of high-resolution images and the search area of the low-resolution images, wherein it comprises:
a denoising module configured to convolve the high-resolution image and the low-resolution image with the Gaussian filter to obtain adenoised high-resolution image and a denoised low-resolution image;
a first calculation module configured to calculate the gradient intensity G and direction *θ* of the denoised high-resolution image and the denoised low-resolution image respectively;
a second calculation module configured to calculate the raw edges of the high-resolution image and the low-resolution image according to the gradient strength G and the direction*θ* of the denoised high-resolution image and the gradient strength G and the direction*θ* of the denoised low-resolution image;
an edge sparse module configured to sparse the raw edges of the high-resolution image and the low-resolution image using a non-maximum suppression method to obtain the sparsed edges thereof;
a suppression module configured to suppress the weak pixels of the sparsed edges according to the preset high and low thresholds to obtain ideal edges and determine the search area of the high-resolution image and the search area of the low-resolution image according to the ideal edges, respectively.

Further, the determination module determines the high-frequency information of the high-resolution image from the search region of the high-resolution image and the high-frequency information of the low-resolution image from the search region of the low-resolution image by using a selective patch processing method, wherein it comprises:
a segmentation module configured to divide the search area of the high-resolution image and the corresponding area of the low-resolution image that matches the search area of the high-resolution image into N sub-blocks, ${\left\{{s}_{i}\right\}}_{i = 1}^{N}$ and ${\left\{{t}_{i}\right\}}_{i = 1}^{N}$, respectively;
an extraction module configured to extract gradient feature vectors of each sub-block, by using five gradient operators , wherein the five gradient operators are expressed as: ${f}_{1} = \left[-1,0,1\right]$ ${f}_{2} = {f}_{1}^{T}$ ${f}_{3} = \left[1,0,-2,0,1\right]$ ${f}_{4} = {f}_{3}^{T}$ ${f}_{5} = \left[1,0,-1;-1,0,1\right]$
the gradient feature vectors extracted by the five gradient operators are denoted as *f_{y}, f_{y}, fₓₓ, f_{yy}*, and f*_{xy}*;
a feature difference calculation module configured to calculate the feature difference *Dᵢ* according to the extracted gradient feature vectors, wherein the feature difference *Dᵢ* is given by: ${D}_{i} = \left|\left|{f}_{i}^{ε}\right|-\left|{f}_{i}^{η}\right|\right|$ where ${f}^{ε} = \frac{{f}_{x}^{2} {f}_{xx} + 2 {f}_{x} {f}_{y} {f}_{xy} + {f}_{y}^{2} {f}_{yy}}{{f}_{x}^{2} + {f}_{y}^{2}}$ ${f}^{η} = \frac{{f}_{y}^{2} {f}_{xx} + 2 {f}_{x} {f}_{y} {f}_{xy} + {f}_{x}^{2} {f}_{yy}}{{f}_{x}^{2} + {f}_{y}^{2}}$
a high-frequency information confirmation module configured to configured to arrange all the feature differences in the order of size to obtain a sequence; the sub-block corresponding to the feature difference in the middle position of the sequence is the sub-block of high-frequency information.

Further, the processing module comprises:
a function acquisition module configured to obtain a cost function; the cost function is given by $\left({t}_{i}, {s}_{i}\right) = {argmin}_{{t}_{i} , {s}_{i}} {\sum }_{i ∈ ℧} {E}_{u} \left({t}_{i}, {s}_{i}, {T}_{i}\right)$ *Tᵢ* is the transformation parameter; 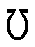 is the index of the stereoscopic image pair. *Eᵤ*(**t***ᵢ,***s***ᵢ,Hᵢ*) denotes the Euclidean distance, which can be represented by: ${E}_{u} \left({t}_{i}, {s}_{i}, {T}_{i}\right) = {\left‖P\left({t}_{i}\right)-S\left({s}_{i}, {T}_{i}\right)\right‖}_{2}^{2}$ Where *P*(**t***ᵢ*) is the intensity of the sub-block t, in the low-resolution image. *S*(***s**_{i,}Tᵢ*) is the intensity of the sub-block **s*ᵢ*** in the high resolution image;
a parameter transformation calculation module configured to calculate the transformation parameter *Tᵢ* according to the cost function, which comprises:
   acquire the isomorphic map, **H***m_{ᵢ}*, used for rectifying the planes in the image, wherein the three vectors of **H***_{mᵢ}* are denoted as **h**₁,**h**₂,**h**₃,and the target sub-block ${t}_{i}^{′}$ in the low-resolution image and the rectified source sub-block ${s}_{i}^{′}$ in the high-resolution image are denoted as ${t}_{i}^{′} = {\left[{h}_{1}{t}_{i},{h}_{2}{t}_{i},{h}_{3}{t}_{i}\right]}^{T}$ ${s}_{i}^{′} = {\left[{h}_{1}{s}_{i},{h}_{2}{s}_{i},{h}_{3}{s}_{i}\right]}^{T}$
   assume (*d^{x}, d^{y}*) is the displacement vector of the rectified source sub-block ${s}_{i}^{′}$ from the target space to the rectified space; the rectified source sub-block ${s}_{i}^{′}$ is expressed by ${s}_{i}^{′} = \left[\begin{matrix}{h}_{1} + {h}_{3} {d}^{x} \\ {h}_{2} + {h}_{3} {d}^{x} \\ {h}_{3}\end{matrix}\right] {t}_{i}$ the source sub-block **s***ᵢ* in the high resolution image is represented by ${s}_{i} = {H}_{{m}_{i}}^{- 1} {s}_{i}^{′} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right] {t}_{i}$ *Tᵢ* is denoted by ${T}_{i} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right]$
   a pasting module configured to paste the high-frequency information of the high-resolution image to the high-frequency information of the low-resolution image according to the transformation parameter *Tᵢ*.

The contribution achieved by the present invention:
The prior knowledge of high-resolution images in heterogeneous stereoscopic images can be directly used to recover high-frequency information from low-resolution images. It can use the spatial correlation and viewpoint correlation of stereo images to find corresponding sub-blocks for low-resolution images from high-resolution images and efficiently compensate for the heterogeneity between stereo images. It is not limited to a specific image compression method, has good robustness and generality, and does not need to spend a lot of time training the weights and offsets of convolutional neural networks.

### BRIEF DESCRIPTION OF THE DRAWINGS

FIG.1 is the framework of the super-resolution reconstruction method for heterogeneous stereoscopic images.
FIG.2 is the schematic diagram of edge detection algorithm

### EMBODIMENT ONE

The present invention will be further described below in conjunction with the accompanying drawings. The following examples are only used to further illustrate the technical solutions of the present invention, but not be used to limit the protection scope of the present invention as set out in the appended claims.

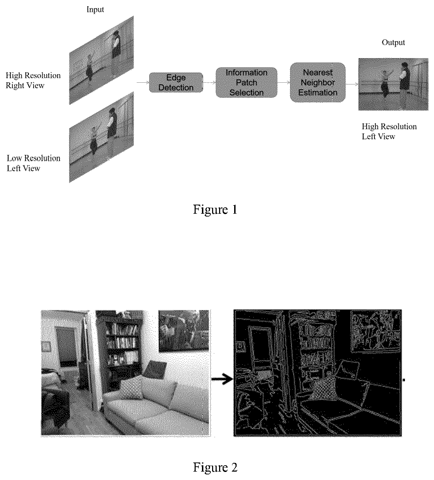

The block diagram of the method for super-resolution reconstruction of the heterogeneous stereoscopic image is shown in Figure 1. The input is a high-resolution right-view image and a low-resolution left-view image. The output is the reconstructed high-resolution left view image. The proposed method framework consists of three steps: edge detection, informative patch selection, and nearest neighbor (NNF) estimation. To acquire the high-frequency information corresponding to each part of the low-resolution image, the edge detection method is adopted to constrain the search area in the high-resolution image. To further improve the search efficiency of high-frequency patches, the selective patch processing method is used to obtain matching high-frequency information from the corresponding search areas. Finally, patches from high-resolution images are pasted to target locations in low-resolution images through parametric transformations, enabling coverage of low-quality information. Each step will be described in detail in the following sections.

### 1. Edge detection

To improve the search efficiency, the results of edge detection are used to narrow the search range of patches, in which the patches with consistent texture are able to be candidate areas. Canny edge detection is adopted due to the advantages of superior accuracy and time-saving. Gaussian filter is used to preprocess the image for avoiding false edges introduced by noise. The equation used to generate the Gaussian convolution kernel is defined as: ${H}_{ij} = \frac{1}{2 {πσ}^{2}} exp \left(-\frac{{\left(i-\left(k+1\right)\right)}^{2} + {\left(j-\left(k+1\right)\right)}^{2}}{2 {σ}^{2}}\right)$ Where 1 ≤ *i, j* ≤ (2*k* + 1). It means the size of the Gaussian convolution kernel is (2*k* + 1) × (2*k* + 1). The size of the Gaussian convolution kernel is significant since it is related to the final result. Considering the complexity and effect of the edge detection result, k is set to 2. Gradient strength G and the direction*^{θ}* are denoted by: $G = \sqrt{{G}_{x}^{2} + {G}_{y}^{2}}$ $θ = arctan \left({G}_{y}/{G}_{x}\right)$ in which *Gₓ* and *G_{y}* are the derivative of the horizontal and vertical directions of the image, respectively. They are calculated by sobel operator.

The edges are still very blurred by using the gradient derivative only. In order to solve this problem, non-maximum suppression is used to sparse the edge for acquiring a unique maximum value locally. Spurious responses caused by small noise and color change still exist after none-maximum suppression. To remove this negative effect, high and low thresholds are defined to filter edge pixels. Hence, the final ideal edge can be obtained by suppressing weak edge pixels. Figure 2 shows a schematic diagram of the classification of filled pixels after edge detection. The left picture of Figure 2 is the original view, and the right picture of Figure 2 is the edge detection result.

### 2. High resolution patches search

The search area of the high-resolution image and the correspondingly area of the low-resolution image that matches the search area of the high-resolution image are divided into N sub-blocks, ${\left\{{s}_{i}\right\}}_{i = 1}^{N}$ and ${\left\{{t}_{i}\right\}}_{i = 1}^{N}$, respectively. To obtain image patches with high-frequency information, high-pass filters are used to represent features. A high-pass filter is used to sharpen an image and extract edges, texture, and noise from an image. The simplest filter is the ideal high-pass filter. Both first and second derivatives are used as gradient operators.

The five gradient operators are used to extract gradient feature vectors. The five gradient operators are expressed as: ${f}_{1} = \left[-1,0,1\right]$ ${f}_{2} = {f}_{1}^{T}$ ${f}_{3} = \left[1,0,-2,0,1\right]$ ${f}_{4} = {f}_{3}^{T}$ ${f}_{5} = \left[1,0,-1;-1,0,1\right]$

**The extracted** gradient feature vectors are denoted by *fₓ, f_{y}, fₓₓ, f_{yy}* and f*_{xy}* ; the feature difference is given by: ${D}_{i} = \left|\left|{f}_{i}^{ε}\right|-\left|{f}_{i}^{η}\right|\right|$ where ${f}^{ε} = \frac{{f}_{x}^{2} {f}_{xx} + 2 {f}_{x} {f}_{y} {f}_{xy} + {f}_{y}^{2} {f}_{yy}}{{f}_{x}^{2} + {f}_{y}^{2}}$ ${f}^{η} = \frac{{f}_{y}^{2} {f}_{xx} + 2 {f}_{x} {f}_{y} {f}_{xy} + {f}_{x}^{2} {f}_{yy}}{{f}_{x}^{2} + {f}_{y}^{2}}$

Each patch is represented by five feature vectors. Different eigenvalues represent different information from the image:
1) For the area analysis, the edges $\left|{f}_{i}^{ε}\right|$ are larger but $\left|{f}_{i}^{η}\right|$ smaller.
2) For the smoothness analysis, both $\left|{f}_{i}^{ε}\right|$ and $\left|{f}_{i}^{η}\right|$ are smaller.
3) For the noise analysis, both $\left|{f}_{i}^{ε}\right|$ and $\left|{f}_{i}^{η}\right|$ are larger.

The goal of this method is to select sub-blocks with high-frequency information. Hence, the feature vector which can make *Dᵢ* be the median should be selected. Based on this analysis, the method not only minimizes the distance of low-frequency base structures but also preserves high-frequency detailed structures precisely.

### 3. The nearest neighbor region estimation

In order to obtain the transformation parameters of the high-resolution patches covering the low-resolution information, the nearest neighbor estimation method is adopted. The key idea of the cost function is to calculate the sum of squares of Euclidean distances, which is also adopted by the classical feature detection algorithm SIFT. The cost function can be formulated as:
The cost function is given by: $\left({t}_{i}, {s}_{i}\right) = {argmin}_{{t}_{i} , {s}_{i}} {\sum }_{i ∈ ℧} {E}_{u} \left({t}_{i}, {s}_{i}, {T}_{i}\right)$ *Tᵢ* is the transformation parameter; 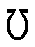 is the index of the stereoscopic image pair. *Eᵤ*(***t**ᵢ,**s**ᵢ,Hᵢ*) denotes the Euclidean distance, which can be represented by: ${E}_{u} \left({t}_{i}, {s}_{i}, {T}_{i}\right) = {\left‖P\left({t}_{i}\right)-S\left({s}_{i}, {T}_{i}\right)\right‖}_{2}^{2}$ Where *P*(**t***ᵢ*) is the intensity of the sub-block **t***ᵢ* in the low-resolution image. *S*(***s**ᵢ,Tᵢ*) is the intensity of the sub-block **s***ᵢ* in the high resolution image.

The transformation parameter *Tᵢ* is calculated by the cost function, which comprises:
acquire the isomorphic map, **H***_{mᵢ}*, used for rectifying the planes in the image. The three vectors of **H***_{mᵢ}* are denoted as **h**₁**,h**_{2,}**h**₃. The target sub-block ${t}_{i}^{′}$ in the low-resolution image and the rectified source sub-block ${s}_{i}^{′}$ in the high-resolution image are denoted as ${t}_{i}^{′} = {\left[{h}_{1}{t}_{i},{h}_{2}{t}_{i},{h}_{3}{t}_{i}\right]}^{T}$ ${s}_{i}^{′} = {\left[{h}_{1}{s}_{i},{h}_{2}{s}_{i},{h}_{3}{s}_{i}\right]}^{T}$
assume (*d^{x}, d^{y}*) is the displacement vector of the rectified source sub-block ${s}_{i}^{′}$ from the target space to the rectified space; the rectified source sub-block ${s}_{i}^{′}$ is expressed by ${s}_{i}^{′} = \left[\begin{matrix}{h}_{1} + {h}_{3} {d}^{x} \\ {h}_{2} + {h}_{3} {d}^{x} \\ {h}_{3}\end{matrix}\right] {t}_{i}$ the source sub-block **s***ᵢ* in the high resolution image is represented by ${s}_{i} = {H}_{{m}_{i}}^{- 1} {s}_{i}^{′} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right] {t}_{i}$ *Tᵢ* is denoted by ${T}_{i} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right]$

The source patch can be pasted to the target patch by using the above formula to find the transformation parameters.

A super-resolution reconstruction system of heterogeneous stereoscopic images, includes:
an acquisition module configured to acquire a stereoscopic image pair at a certain moment compressed by an asymmetric compression method in a binocular vision system; the stereoscopic image pair includes two views, one of which is a high-resolution image and the other is a low-resolution image;
a narrowing module configured to narrow the search area of high-resolution image and the search area of the low-resolution image;
a determination module configured to determine the high-frequency information of the high-resolution image from the search region of the high-resolution image and the high-frequency information of the low-resolution image from the search region of the low-resolution image, respectively;
a processing module configured to paste the high-frequency information of the high-resolution image to the high-frequency information of the low-resolution image through parameter transformation.

Further, the narrowing module uses edge detection to narrow the search area of high-resolution images and low-resolution images, and comprises:
a denoising module configured to convolve the high-resolution image and the low-resolution image with the Gaussian filter to obtain a denoised high-resolution image and a denoised low-resolution image;
a first calculation module configured to calculate the gradient intensity G and direction *θ* of the denoised high-resolution image and the denoised low-resolution image respectively;
a second calculation module configured to calculate the raw edges of the high-resolution image and the low-resolution image according to the gradient strength G and direction*θ* of the denoised high-resolution image and the gradient strength G and the direction*θ* of the denoised low-resolution image;
an edge sparse module configured to sparse the raw edges of the high-resolution image and the low-resolution image using the non-maximum suppression method to obtain the sparsed edges thereof;
a suppression module configured to suppress the weak pixels of the sparsed edges according to the preset high and low thresholds to obtain ideal edges, and determine the search area of the high-resolution image and the search area of the low-resolution image according to the ideal edges, respectively.

Further, the determination module determines the high-frequency information of high-resolution images and low-resolution images from the search regions of high-resolution images and low-resolution images by using a selective patch processing method. The determination module comprises:
a segmentation module configured to divide the search area of the high-resolution image and the correspondingly area of the low-resolution image that matches the search area of the high-resolution image into N sub-blocks, ${\left\{{s}_{i}\right\}}_{i = 1}^{N}$ and ${\left\{{t}_{i}\right\}}_{i = 1}^{N}$, respectively;
an extraction module configured to extract gradient feature vectors of each each sub-block by using five gradient operators, wherein the five gradient operators are expressed as: ${f}_{1} = \left[-1,0,1\right]$ ${f}_{2} = {f}_{1}^{T}$ ${f}_{3} = \left[1,0,-2,0,1\right]$ ${f}_{4} = {f}_{3}^{T}$ ${f}_{5} = \left[1,0,-1;-1,0,1\right]$
a feature difference calculation module configured to calculate the feature difference *Dᵢ* according to the extracted gradient feature vectors, where the extracted gradient feature vectors are denoted as *fₓ, f_{y}, fₓₓ, f_{yy},*
   and f*_{xy}*, and the feature difference is given by: ${D}_{i} = \left‖{f}_{i}^{ε}\left|-\right|{f}_{i}^{η}\right‖$ where ${f}^{ε} = \frac{{f}_{x}^{2} {f}_{xx} + 2 {f}_{x} {f}_{y} {f}_{xy} + {f}_{y}^{2} {f}_{yy}}{{f}_{x}^{2} + {f}_{y}^{2}}$ ${f}^{η} = \frac{{f}_{y}^{2} {f}_{xx} + 2 {f}_{x} {f}_{y} {f}_{xy} + {f}_{x}^{2} {f}_{yy}}{{f}_{x}^{2} + {f}_{y}^{2}}$
a high-frequency information confirmation module configured to arrange all the feature differences in the order of size to obtain a sequence; the sub-block corresponding to the feature difference in the middle position of the sequence is the sub-block of high-frequency information.

Further, the processing module includes:
a function acquisition module configured to obtain a cost function; the cost function is given by $\left({t}_{i}, {s}_{i}\right) = {arg min}_{{t}_{i} , {s}_{i}} {\sum }_{i ∈ ℧} {E}_{u} \left({t}_{i}, {s}_{i}, {T}_{i}\right)$ *Tᵢ* is the transformation parameter; 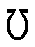 is the index of thestereoscopic image pair. *Eᵤ*(***t**_{i,}**s**ᵢ,Hᵢ*) denotes the Euclidean distance, which can be represented by: ${E}_{u} \left({t}_{i}, {s}_{i}, {T}_{i}\right) = {\left‖P\left({t}_{i}\right)-S\left({s}_{i}, {T}_{i}\right)\right‖}_{2}^{2}$ where *P*(**t***ᵢ*) is the intensity of the sub-block **t***ᵢ* in the low-resolution image. *S*(**s***ᵢ*,*Tᵢ*) is the intensity of the sub-block **s***ᵢ* in the high resolution image;
a parameter transformation calculation module configured to calculate the transformation parameter *Tᵢ* according to the cost function, which comprises:
   acquire the isomorphic map **H***_{mᵢ}* for rectifying the planes in the scene, wherein the three vectors of **H***_{mᵢ}* are denoted as **h**₁,**h**₂,**h**₃, the target sub-block ${t}_{i}^{′}$ in the low-resolution image and the rectified source sub-block ${s}_{i}^{′}$ in the high-resolution image are denoted as ${t}_{i}^{′} = {\left[{h}_{1}{t}_{i},{h}_{2}{t}_{i},{h}_{3}{t}_{i}\right]}^{T}$ ${s}_{i}^{′} = {\left[{h}_{1}{s}_{i},{h}_{2}{s}_{i},{h}_{3}{s}_{i}\right]}^{T}$
   assume (*d^{x}, d^{y}*) is the displacement vector of the rectified source sub-block ${s}_{i}^{′}$ from the target space to the rectified space; the rectified source sub-block ${s}_{i}^{′}$ is expressed by ${s}_{i}^{′} = \left[\begin{matrix}{h}_{1} + {h}_{3} {d}^{x} \\ {h}_{2} + {h}_{3} {d}^{x} \\ {h}_{3}\end{matrix}\right] {t}_{i}$ the source sub-block **s***ᵢ* in the high resolution image is represented by ${s}_{i} = {H}_{{m}_{i}}^{- 1} {s}_{i}^{′} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right] {t}_{i}$ *Tᵢ* is denoted by ${T}_{i} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right]$
   a pasting module configured to paste the high-frequency information of the high-resolution image to the high-frequency information of the low-resolution image according to the transformation parameter *Tᵢ*.

As will be appreciated by those skilled in the art, the embodiments of the present application may be provided as a method, a system, or a computer program product. Accordingly, the present application may take the form of an entire hardware embodiment, an entire software embodiment, or an embodiment combining software and hardware aspects. Furthermore, the present application may take the form of a computer program product embodied on one or more computer-usable storage media (including, but not limited to, disk storage, CD-ROM, optical storage, etc.) having computer-usable program code embodied therein.

The present application is described with reference to flowcharts and/or block diagrams of methods, apparatus (systems), and computer program products of embodiments of the present application. Each process and/or block in the flowcharts and/or block diagrams, and combinations of processes and/or blocks in the flowcharts and/or block diagrams can be implemented by computer program instructions.

These computer program instructions can be provided to the processor of a general-purpose computer, special purpose computer, embedded processor, or other programmable data processing device to produce a machine, which implements an instrument with the function specified in a flow or flows of the flowcharts and/or a block or blocks of the block diagrams by instructions executed by the processor of a computer or other programmable data processing device.

The above are only the preferred embodiments of the present invention. It should be pointed out that for those skilled in the art, several improvements and modifications can be made without departing from the technical principles of the present invention, which is set out in the appended claims.

## Claims

1. A super-resolution reconstruction method of heterogeneous stereoscopic images, wherein it comprises:
acquire a stereoscopic image pair at a certain moment compressed by an asymmetrical compression method in a binocular vision system, and the stereoscopic image pair includes two views, one of which is a high-resolution image, and the other is a low-resolution image;
narrow the search area of the high-resolution image and the search area of the low-resolution image;
determine the high-frequency information of the high-resolution image from the search region of the high-resolution image and the high-frequency information of the low-resolution image from the search region of the low-resolution image, respectively; and
paste the high-frequency information of the high-resolution image to the high-frequency information of the low-resolution image through parametric transformation.

2. The super-resolution reconstruction method of heterogeneous stereoscopic images according to claim 1, wherein the search area of the high-resolution image and the search area of the low-resolution image are narrowed by using an edge detection method.

3. The super-resolution reconstruction method of heterogeneous stereoscopic images according to claim 2, wherein the search area of the high-resolution image and the search area of the low-resolution image are narrowed by the following steps:
convolve the high-resolution image and the low-resolution image with a Gaussian filter to obtain a denoised high-resolution image and a denoised low-resolution image;
calculate the gradient strength G and the direction *θ* of the denoised high-resolution image and the denoised low-resolution image, respectively;
calculate the raw edges of the high-resolution image and the raw edges ofthe low-resolution image according to the gradient strength G and the direction *θ* of the denoised high-resolution image and the gradient strength G and direction *θ* of the denoised low-resolution image respectively;
use a non-maximum suppression method to sparse the raw edges of the high-resolution image and the raw edges of the low-resolution image to obtain sparsed edges thereof; and
suppress the weak pixels of the sparsed edges according to the preset high and low thresholds to obtain ideal edges, and determine the search area of the high-resolution image and the search area of the low-resolution image according to the ideal edges, respectively.

4. The super-resolution reconstruction method for heterogeneous stereoscopic images according to claim 1, wherein a selective patch processing method is used to determine the high-frequency information of the high-resolution image from the search region of the high-resolution image and the high-frequency information of the low-resolution image from the search region of the low-resolution image, respectively.

5. The super-resolution reconstruction method for heterogeneous stereoscopic images according to claim 4, wherein the high-frequency information of the high-resolution image and the high-frequency information of the low-resolution image are determined by the following steps:
divide the search area of the high-resolution image and the corresponding area of the low-resolution image that matches the search area of the high-resolution image into N sub-blocks, and ${\left\{{t}_{i}\right\}}_{i = 1}^{N}$, respectively;
use five gradient operators to extract gradient feature vectors of each sub-block *sᵢ*and t*ᵢ*, wherein the five gradient operators are expressed as: ${f}_{1} = \left[-1,0,1\right]$ ${f}_{2} = {f}_{1}^{T}$ ${f}_{3} = \left[1,0,-2,0,1\right]$ ${f}_{4} = {f}_{3}^{T}$ ${f}_{5} = \left[1,0,-1;-1,0,1\right]$ the gradient feature vectors extracted by the five gradient operators are denoted as *fₓ, f_{y}*, *fₓₓ*, *f_{yy}*, and f*_{xy}*;
calculate the feature difference *Dᵢ* of the each sub-block according to the extracted gradient feature vectors, where the feature difference *Dᵢ* is given by: ${D}_{i} = \left‖{f}_{i}^{ε}\left|-\right|{f}_{i}^{η}\right‖$ where ${f}^{ε} = \frac{{f}_{x}^{2} {f}_{xx} + 2 {f}_{x} {f}_{y} {f}_{xy} + {f}_{y}^{2} {f}_{yy}}{{f}_{x}^{2} + {f}_{y}^{2}}$ ${f}^{η} = \frac{{f}_{y}^{2} {f}_{xx} + 2 {f}_{x} {f}_{y} {f}_{xy} + {f}_{x}^{2} {f}_{yy}}{{f}_{x}^{2} + {f}_{y}^{2}}$
arrange all the feature differences in the order of size to obtain a sequence; the sub-block corresponding to the feature difference in the middle position of the sequence is the sub-block with high-frequency information.

6. The super-resolution reconstruction method for heterogeneous stereoscopic images according to claim 1, wherein the high-frequency information of the high-resolution image is pasted to the high-frequency information of the low-resolution image through parametric transformation, including:
acquire a cost function which is given by: $\left({t}_{i}, {s}_{i}\right) = {argmin}_{{t}_{i} , {s}_{i}} {\sum }_{i ∈ ℧} {E}_{u} \left({t}_{i}, {s}_{i}, {T}_{i}\right)$ *Tᵢ* is the transformation parameter; 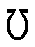 is the index of the stereoscopic image pair; *Eᵤ*(***t**ᵢ,**s**ᵢ,Hᵢ*) denotes the Euclidean distance, which can be represented by: ${E}_{u} \left({t}_{i}, {s}_{i}, {T}_{i}\right) = {\left‖P\left({t}_{i}\right)-S\left({s}_{i}, {T}_{i}\right)\right‖}_{2}^{2}$ Where *P*(**t***ᵢ*) is the intensity of the sub-block t, in the low-resolution image; *S*(***s**ᵢ,Tᵢ*) is the intensity of the sub-block **s***ᵢ* in the high resolution image;
calculate the transformation parameter *Tᵢ* according to the cost function, which comprises:
acquire the isomorphic map, **H***_{mᵢ}*, used for rectifying the sub-blocks in the image pair, wherein the three vectors of **H***_{mᵢ}* are denoted as **h**₁,**h**₂,**h**₃, and the target sub-block ${t}_{i}^{′}$ in the low-resolution image and the rectified source sub-block ${s}_{i}^{′}$ in the high-resolution image are denoted as ${t}_{i}^{′} = {\left[{h}_{1}{t}_{i},{h}_{2}{t}_{i},{h}_{3}{t}_{i}\right]}^{T}$ ${s}_{i}^{′} = {\left[{h}_{1}{s}_{i},{h}_{2}{s}_{i},{h}_{3}{s}_{i}\right]}^{T}$
assume (*d^{x} , d^{y}*) is the displacement vector of the rectified source sub-block ${s}_{i}^{′}$ from the target space to the rectified space; the rectified source sub-block ${s}_{i}^{′}$ is expressed by ${s}_{i}^{′} = \left[\begin{matrix}{h}_{1} + {h}_{3} {d}^{x} \\ {h}_{2} + {h}_{3} {d}^{x} \\ {h}_{3}\end{matrix}\right] {t}_{i}$ the source sub-block **s***ᵢ* in the high resolution image is represented by ${s}_{i} = {H}_{{m}_{i}}^{- 1} {s}_{i}^{′} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right] {t}_{i}$ *Tᵢ* is denoted by ${T}_{i} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right]$
paste the high-frequency information of the high-resolution image to the high-frequency information of the low-resolution image according to the transformation parameter *Tᵢ*.

7. A super-resolution reconstruction system of heterogeneous stereoscopic images, wherein it comprises:
an acquisition module configured to acquire a stereoscopic image pair at a certain moment compressed by an asymmetric compression method in a binocular vision system; the stereoscopic image pair includes two views, one of which is a high-resolution image and the other is a low-resolution image;
a narrowing module configured to narrow the search area of high-resolution image and the search area of the low-resolution image;
a determination module configured to determine the high-frequency information of the high-resolution image from the search region of the high-resolution image and the high-frequency information of the low-resolution image from the search region of the low-resolution image, respectively;
a processing module configured to paste the high-frequency information of the high-resolution image to the high-frequency information of the low-resolution image through parameter transformation.

8. The super-resolution reconstruction system of the heterogeneous stereoscopic images according to claim 7, wherein the narrowing module uses a edge detection method to narrow the search area of high-resolution image and the search area of the low-resolution image, including:
a denoising module configured to convolve the high-resolution image and the low-resolution image with the Gaussian filter to obtain a denoised high-resolution image and a denoised low-resolution image;
a first calculation module configured to calculate the gradient intensity G and the direction*θ* of the denoised high-resolution image and the denoised low-resolution image respectively;
a second calculation module configured to calculate the raw edges of the high-resolution image and the low-resolution image according to the gradient strength G and the direction*θ* of the denoised high-resolution image and the gradient strength G and the direction*θ* of the denoised low-resolution image, respectively;
an edge sparse module configured to sparse the raw edges of the high-resolution image and the low-resolution image using a non-maximum suppression method to obtain the sparsed edges thereof;
a suppression module configured to suppress the weak pixels of the sparsed edges according to the preset high and low thresholds to obtain ideal edges, and determine the search area of the high-resolution image and the search area of the low-resolution image according to the ideal edges, respectively.

9. The super-resolution reconstruction system of heterogeneous stereoscopic images according to claim 7, wherein the determination module determines the high-frequency information of the high-resolution image from the search region of the high-resolution image and the high-frequency information of the low-resolution image from the search region of the low-resolution image, respectively, by using a selective patch processing method; the determination module comprises:
a segmentation module configured to divide the search area of the high-resolution image and the corresponding area of the low-resolution image that matches the search area of the high-resolution image into N sub-blocks, and ${\left\{{t}_{i}\right\}}_{i = 1}^{N}$, respectively;
an extraction module configured to extract gradient feature vectors of each sub-block, *sᵢ*and t*ᵢ*, by using five gradient operators, wherein the five gradient operators are expressed as: ${f}_{1} = \left[-1,0,1\right]$ ${f}_{2} = {f}_{1}^{T}$ ${f}_{3} = \left[1,0,-2,0,1\right]$ ${f}_{4} = {f}_{3}^{T}$ ${f}_{5} = \left[1,0,-1;-1,0,1\right]$ the gradient feature vectors extracted by the five gradient operators are denoted as *fₓ*, *f_{y}*, *fₓₓ*, *f_{yy}*, and f*_{xy}*;
a feature difference calculation module configured to calculate the feature difference *Dᵢ* of the each sub-block s*ᵢ* and t*ᵢ* according to the extracted gradient feature vectors, where the feature difference *Dᵢ* is given by: ${D}_{i} = \left|\left|{f}_{i}^{ε}\right|-\left|{f}_{i}^{η}\right|\right|$ where ${f}^{ε} = \frac{{f}_{x}^{2} {f}_{xx} + 2 {f}_{x} {f}_{y} {f}_{xy} + {f}_{y}^{2} {f}_{yy}}{{f}_{x}^{2} + {f}_{y}^{2}}$ ${f}^{η} = \frac{{f}_{y}^{2} {f}_{xx} + 2 {f}_{x} {f}_{y} {f}_{xy} + {f}_{x}^{2} {f}_{yy}}{{f}_{x}^{2} + {f}_{y}^{2}}$
a high-frequency information determination module configured to arrange all the feature differences in the order of size to obtain a sequence; the sub-block corresponding to the feature difference in the middle position of the sequence is the sub-block of high-frequency information.

10. The super-resolution reconstruction system of heterogeneous stereoscopic images according to claim 7, wherein the processing module includes:
a function acquisition module configured to obtain a cost function; the cost function is given by: $\left({t}_{i}, {s}_{i}\right) = {arg min}_{{t}_{i} , {s}_{i}} {\sum }_{i ∈ ℧} {E}_{u} \left({t}_{i}, {s}_{i}, {T}_{i}\right)$ *Tᵢ* is the transformation parameter; 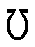 is the index of the stereoscopic image pair; *Eᵤ*(**t***ᵢ*,**s***ᵢ*,*Hᵢ*) denotes the Euclidean distance, which can be represented by: ${E}_{u} \left({t}_{i}, {s}_{i}, {T}_{i}\right) = {\left‖P\left({t}_{i}\right)-S\left({s}_{i}, {T}_{i}\right)\right‖}_{2}^{2}$ where *P*(**t***ᵢ*) is the intensity of the sub-block **t***ᵢ* in the low-resolution image; *S*(**s***ᵢ*, *Tᵢ*) is the intensity of the sub-block **s***ᵢ* in the high resolution image;
a parameter transformation calculation module configured to calculate the transformation parameter *Tᵢ* according to the cost function, which comprises:
acquire the isomorphic map **H***_{mᵢ}* for rectifying the planes in the image, wherein the three vectors of **H***_{mᵢ}* are denoted as **h**₁,**h**₂,**h**₃, and the target sub-block ${t}_{i}^{′}$ in the low-resolution image and the rectified source sub-block ${s}_{i}^{′}$ in the high-resolution image are denoted as ${t}_{i}^{′} = {\left[{h}_{1}{t}_{i},{h}_{2}{t}_{i},{h}_{3}{t}_{i}\right]}^{T}$ ${s}_{i}^{′} = {\left[{h}_{1}{s}_{i},{h}_{2}{s}_{i},{h}_{3}{s}_{i}\right]}^{T}$
assume (*d^{x}, d^{y}*) is the displacement vector of the rectified source sub-block ${s}_{i}^{′}$**s***ᵢ* from the target space to the rectified space; the rectified source sub-block ${s}_{i}^{′}$ is expressed by ${s}_{i}^{′} = \left[\begin{matrix}{h}_{1} + {h}_{3} {d}^{x} \\ {h}_{2} + {h}_{3} {d}^{x} \\ {h}_{3}\end{matrix}\right] {t}_{i}$ the source sub-block **s***ᵢ* in the high resolution image is represented by ${s}_{i} = {H}_{{m}_{i}}^{- 1} {s}_{i}^{′} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right] {t}_{i}$ *Tᵢ* is denoted by ${T}_{i} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right]$ a pasting module configured to paste the high-frequency information of the high-resolution image to the high-frequency information of the low-resolution image according to the transformation parameter *Tᵢ*.

## Patentansprüche

1. Verfahren zur Superauflösungsrekonstruktion heterogener stereoskopischer Bilder, wobei das Verfahren Folgendes umfasst:
Erfassen eines Stereobildpaares zu einem bestimmten Zeitpunkt, das durch ein asymmetrisches Kompressionsverfahren in einem binokularen Sichtsystem komprimiert ist, wobei das Stereobildpaar zwei Ansichten aufweist, von denen eine ein hochauflösendes Bild und die andere ein niedrigauflösendes Bild ist;
Eingrenzen des Suchbereichs des hochauflösenden Bildes und des Suchbereichs des niedrigauflösenden Bildes;
Bestimmen der Hochfrequenzinformation des hochauflösenden Bildes aus dem Suchbereich des hochauflösenden Bildes und der Hochfrequenzinformation des niedrigauflösenden Bildes aus dem Suchbereich des niedrigauflösenden Bildes; und
Einfügen der Hochfrequenzinformation des hochauflösenden Bildes in die Hochfrequenzinformation des niedrigauflösenden Bildes mittels parametrischer Transformation.

2. Verfahren zur Superauflösungsrekonstruktion heterogener stereoskopischer Bilder nach Anspruch 1, wobei der Suchbereich des hochauflösenden Bildes und der Suchbereich des niedrigauflösenden Bildes unter Verwendung eines Kantendetektionsverfahrens eingegrenzt werden.

3. Verfahren zur Superauflösungsrekonstruktion heterogener stereoskopischer Bilder nach Anspruch 2, wobei der Suchbereich des hochauflösenden Bildes und der Suchbereich des niedrigauflösenden Bildes durch die folgenden Schritte eingegrenzt werden:
Falten des hochauflösenden Bildes und des niedrigauflösenden Bildes mit einem Gauß-Filter, um ein entrauschtes hochauflösendes Bild und ein entrauschtes niedrigauflösendes Bild zu erhalten;
Berechnen der Gradientenstärke G und der Richtung *θ* jeweils des entrauschten hochauflösenden Bildes und des entrauschten niedrigauflösenden Bildes;
Berechnen der Rohkanten des hochauflösenden Bildes und der Rohkanten des niedrigauflösenden Bildes gemäß der Gradientenstärke G und der Richtung *θ* des entrauschten hochauflösenden Bildes bzw. gemäß der Gradientenstärke G und der Richtung *θ* des entrauschten niedrigauflösenden Bildes;
Verwenden eines Nicht-Maximum-Unterdrückungsverfahrens, um die Rohkanten des hochauflösenden Bildes und die Rohkanten des niedrigauflösenden Bildes auszudünnen, um so deren ausgedünnte Kanten zu erhalten; und
Unterdrücken der schwachen Pixel der ausgedünnten Kanten gemäß den voreingestellten oberen und unteren Schwellwerten, um ideale Kanten zu erhalten, und Bestimmen des Suchbereichs des hochauflösenden Bildes bzw. des Suchbereichs des niedrigauflösenden Bildes gemäß den idealen Kanten.

4. Verfahren zur Superauflösungsrekonstruktion heterogener stereoskopischer Bilder nach Anspruch 1, wobei ein selektives Patch-Verarbeitungsverfahren verwendet wird, um die Hochfrequenzinformation des hochauflösenden Bildes aus dem Suchbereich des hochauflösenden Bildes und die Hochfrequenzinformation des niedrigauflösenden Bildes aus dem Suchbereich des niedrigauflösenden Bildes jeweils zu bestimmen.

5. Verfahren zur Superauflösungsrekonstruktion heterogener stereoskopischer Bilder nach Anspruch 4, wobei die Hochfrequenzinformation des hochauflösenden Bildes und die Hochfrequenzinformation des niedrigauflösenden Bildes durch die folgenden Schritte bestimmt werden:
Unterteilen des Suchbereichs des hochauflösenden Bildes und des entsprechenden Bereichs des niedrigauflösenden Bildes, der dem Suchbereich des hochauflösenden Bildes entspricht, jeweils in N Unterblöcke ${\left\{{s}_{i}\right\}}_{i = 1}^{N}$ und ${\left\{{t}_{i}\right\}}_{i = 1}^{N}$;
Verwenden von fünf Gradientenoperatoren, um Gradientenmerkmalsvektoren jedes Unterblocks s*ᵢ* und t*ᵢ* zu extrahieren, wobei die fünf Gradientenoperatoren wie folgt ausgedrückt werden: ${f}_{1} = \left[-1,0,1\right]$ ${f}_{2} = {f}_{1}^{T}$ ${f}_{3} = \left[1,0,-2,0,1\right]$ ${f}_{4} = {f}_{3}^{T}$ ${f}_{5} = \left[1,0,-1;-1,0,1\right]$
**wobei die** durch die fünf Gradientenoperatoren extrahierten Gradientenmerkmalsvektoren als *fₓ,f_{y}*,*fₓₓ*,*f_{yy}* und f*_{xy}* bezeichnet werden;
Berechnen der Merkmalsdifferenz *Dᵢ* jedes Unterblocks s*ᵢ* und t*ᵢ* gemäß den extrahierten Gradientenmerkmalsvektoren, wobei die Merkmalsdifferenz *Dᵢ* gegeben ist durch: ${D}_{i} = \left‖{f}_{i}^{ε}\left|-\right|{f}_{i}^{η}\right‖$
worin ${f}^{ε} = \frac{{f}_{x}^{2} {f}_{xx} + 2 {f}_{x} {f}_{y} {f}_{xy} + {f}_{y}^{2} {f}_{yy}}{{f}_{x}^{2} + {f}_{y}^{2}}$ ${f}^{η} = \frac{{f}_{y}^{2} {f}_{xx} + 2 {f}_{x} {f}_{y} {f}_{xy} + {f}_{x}^{2} {f}_{yy}}{{f}_{x}^{2} + {f}_{y}^{2}}$
Anordnen aller Merkmalsdifferenzen der Größe nach, um eine Sequenz zu erhalten, wobei der Unterblock, der der Merkmalsdifferenz an der mittleren Position der Sequenz entspricht, der Unterblock mit Hochfrequenzinformation ist.

6. Verfahren zur Superauflösungsrekonstruktion heterogener stereoskopischer Bilder nach Anspruch 1, wobei die Hochfrequenzinformation des hochauflösenden Bildes in die Hochfrequenzinformation des niedrigauflösenden Bildes mittels parametrischer Transformation eingefügt wird, umfassend:
Erfassen einer Kostenfunktion, die gegeben ist durch: $\left({t}_{i}, {s}_{i}\right) = {argmin}_{{t}_{i} , {s}_{i}} {\sum }_{i ∈ ℧} {E}_{u} \left({t}_{i}, {s}_{i}, {T}_{i}\right)$
wobei *Tᵢ* der Transformationsparameter ist; 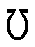 der Index des Stereobildpaares ist; *Eᵤ*(***t**ᵢ,**s**ᵢ,Hᵢ*) den euklidischen Abstand bezeichnet, der wie folgt dargestellt werden kann: ${E}_{u} \left({t}_{i}, {s}_{i}, {T}_{i}\right) = {\left‖P\left({t}_{i}\right)-S\left({s}_{i}, {T}_{i}\right)\right‖}_{2}^{2}$
wobei *P*(**t***ᵢ*) die Intensität des Unterblocks **t***ᵢ* im niedrigauflösenden Bild ist; *S*(s*ᵢ*,*Tᵢ*) die Intensität des Unterblocks **s***ᵢ* im hochauflösenden Bild ist;
Berechnen des Transformationsparameters *Tᵢ* gemäß der Kostenfunktion, umfassend:
Erfassen der isomorphen Abbildung **H***_{mᵢ}*, die zur Rektifizierung der Unterblöcke im Bildpaar verwendet wird, wobei die drei Vektoren von **H***_{mᵢ}* als h₁,h₂,h₃ bezeichnet werden und der Ziel-Unterblock ${t}_{i}^{′}$ im niedrigauflösenden Bild sowie der rektifizierte Quell-Unterblock ${s}_{i}^{′}$ im hochauflösenden Bild bezeichnet werden als: ${t}_{i}^{′} = {\left[{h}_{1}{t}_{i},{h}_{2}{t}_{i},{h}_{3}{t}_{i}\right]}^{T}$ ${s}_{i}^{′} = {\left[{h}_{1}{s}_{i},{h}_{2}{s}_{i},{h}_{3}{s}_{i}\right]}^{T}$
Annehmen, dass (*d^{x},d^{y}*) der Verschiebungsvektor des rektifizierten Quell-Unterblocks ${s}_{i}^{′}$ vom Zielraum in den rektifizierten Raum ist; der rektifizierte Quell-Unterblock ${s}_{i}^{′}$ wird ausgedrückt durch ${s}_{i}^{′} = \left[\begin{matrix}{h}_{1} + {h}_{3} {d}^{x} \\ {h}_{2} + {h}_{3} {d}^{x} \\ {h}_{3}\end{matrix}\right] {t}_{i}$
wobei der Quell-Unterblock **s***ᵢ* im hochauflösenden Bild dargestellt wird durch ${s}_{i} = {H}_{{m}_{i}}^{- 1} {s}_{i}^{′} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right] {t}_{i}$
wobei *Tᵢ* bezeichnet wird durch ${T}_{i} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right]$
Einfügen der Hochfrequenzinformation des hochauflösenden Bildes in die Hochfrequenzinformation des niedrigauflösenden Bildes gemäß dem Transformationsparameter *Tᵢ*.

7. System zur Superauflösungsrekonstruktion heterogener stereoskopischer Bilder, wobei das System Folgendes umfasst:
ein Erfassungsmodul, das dazu eingerichtet ist, ein Stereobildpaar zu einem bestimmten Zeitpunkt zu erfassen, das durch ein asymmetrisches Kompressionsverfahren in einem binokularen Sichtsystem komprimiert ist, wobei das Stereobildpaar zwei Ansichten aufweist, von denen eine ein hochauflösendes Bild und die andere ein niedrigauflösendes Bild ist;
ein Eingrenzungsmodul, das dazu eingerichtet ist, den Suchbereich des hochauflösenden Bildes und den Suchbereich des niedrigauflösenden Bildes einzugrenzen;
ein Bestimmungsmodul, das dazu eingerichtet ist, die Hochfrequenzinformation des hochauflösenden Bildes aus dem Suchbereich des hochauflösenden Bildes und die Hochfrequenzinformation des niedrigauflösenden Bildes aus dem Suchbereich des niedrigauflösenden Bildes jeweils zu bestimmen; und
ein Verarbeitungsmodul, das dazu eingerichtet ist, die Hochfrequenzinformation des hochauflösenden Bildes in die Hochfrequenzinformation des niedrigauflösenden Bildes mittels parametrischer Transformation einzufügen.

8. System zur Superauflösungsrekonstruktion heterogener stereoskopischer Bilder nach Anspruch 7, wobei das Eingrenzungsmodul ein Kantendetektionsverfahren verwendet, um den Suchbereich des hochauflösenden Bildes und den Suchbereich des niedrigauflösenden Bildes einzugrenzen, umfassend:
ein Entrauschungsmodul, das dazu eingerichtet ist, das hochauflösende Bild und das niedrigauflösende Bild mit einem Gauß-Filter zu falten, um ein entrauschtes hochauflösendes Bild und ein entrauschtes niedrigauflösendes Bild zu erhalten;
ein erstes Berechnungsmodul, das dazu eingerichtet ist, die Gradientenstärke G und die Richtung *θ* jeweils des entrauschten hochauflösenden Bildes und des entrauschten niedrigauflösenden Bildes zu berechnen;
ein zweites Berechnungsmodul, das dazu eingerichtet ist, die Rohkanten des hochauflösenden Bildes und die Rohkanten des niedrigauflösenden Bildes gemäß der Gradientenstärke G und der Richtung *θ* des entrauschten hochauflösenden Bildes bzw. gemäß der Gradientenstärke G und der Richtung *θ* des entrauschten niedrigauflösenden Bildes zu berechnen;
ein Kantenausdünnungsmodul, das dazu eingerichtet ist, die Rohkanten des hochauflösenden Bildes und des niedrigauflösenden Bildes unter Verwendung eines Nicht-Maximum-Unterdrückungsverfahrens auszudünnen, um so deren ausgedünnte Kanten zu erhalten;
ein Unterdrückungsmodul, das dazu eingerichtet ist, die schwachen Pixel der ausgedünnten Kanten gemäß den voreingestellten oberen und unteren Schwellwerten zu unterdrücken, um ideale Kanten zu erhalten, und den Suchbereich des hochauflösenden Bildes bzw. den Suchbereich des niedrigauflösenden Bildes gemäß den idealen Kanten zu bestimmen.

9. System zur Superauflösungsrekonstruktion heterogener stereoskopischer Bilder nach Anspruch 7, wobei das Bestimmungsmodul die Hochfrequenzinformation des hochauflösenden Bildes aus dem Suchbereich des hochauflösenden Bildes und die Hochfrequenzinformation des niedrigauflösenden Bildes aus dem Suchbereich des niedrigauflösenden Bildes jeweils unter Verwendung eines selektiven Patch-Verarbeitungsverfahrens bestimmt, wobei das Bestimmungsmodul umfasst:
ein Segmentierungsmodul, das dazu eingerichtet ist, den Suchbereich des hochauflösenden Bildes und den entsprechenden Bereich des niedrigauflösenden Bildes, der dem Suchbereich des hochauflösenden Bildes entspricht, jeweils in N Unterblöcke ${\left\{{s}_{i}\right\}}_{i = 1}^{N}$ und ${\left\{{t}_{i}\right\}}_{i = 1}^{N}$ zu unterteilen;
ein Extraktionsmodul, das dazu eingerichtet ist, Gradientenmerkmalsvektoren jedes Unterblocks *sᵢ* und t*ᵢ* unter Verwendung von fünf Gradientenoperatoren zu extrahieren, wobei die fünf Gradientenoperatoren wie folgt ausgedrückt werden: ${f}_{1} = \left[-1,0,1\right]$ ${f}_{2} = {f}_{1}^{T}$ ${f}_{3} = \left[1,0,-2,0,1\right]$ ${f}_{4} = {f}_{3}^{T}$ ${f}_{5} = \left[1,0,-1;-1,0,1\right]$
wobei die durch die fünf Gradientenoperatoren extrahierten Gradientenmerkmalsvektoren als *fₓ,f_{y},fₓₓ,f_{yy}* und f*_{xy}* bezeichnet werden;
ein Merkmalsdifferenz-Berechnungsmodul, das dazu eingerichtet ist, die Merkmalsdifferenz *Dᵢ* jedes Unterblocks s*ᵢ* und **t***ᵢ* gemäß den extrahierten Gradientenmerkmalsvektoren zu berechnen, wobei die Merkmalsdifferenz *Dᵢ* gegeben ist durch: ${D}_{i} = \left|\left|{f}_{i}^{ε}\right|-\left|{f}_{i}^{η}\right|\right|$
worin ${f}^{ε} = \frac{{f}_{x}^{2} {f}_{xx} + 2 {f}_{x} {f}_{y} {f}_{xy} + {f}_{y}^{2} {f}_{yy}}{{f}_{x}^{2} + {f}_{y}^{2}}$ ${f}^{η} = \frac{{f}_{y}^{2} {f}_{xx} + 2 {f}_{x} {f}_{y} {f}_{xy} + {f}_{x}^{2} {f}_{yy}}{{f}_{x}^{2} + {f}_{y}^{2}}$
ein Hochfrequenzinformations-Bestimmungsmodul, das dazu eingerichtet ist, alle Merkmalsdifferenzen der Größe nach anzuordnen, um eine Sequenz zu erhalten, wobei der Unterblock, der der Merkmalsdifferenz an der mittleren Position der Sequenz entspricht, der Unterblock mit Hochfrequenzinformation ist.

10. System zur Superauflösungsrekonstruktion heterogener stereoskopischer Bilder nach Anspruch 7, wobei das Verarbeitungsmodul umfasst:
ein Funktionserfassungsmodul, das dazu eingerichtet ist, eine Kostenfunktion zu erfassen, wobei die Kostenfunktion gegeben ist durch: $\left({t}_{i}, {s}_{i}\right) = {argmin}_{{t}_{i} . {s}_{i}} {\sum }_{i ∈ ℧} {E}_{u} \left({t}_{i}, {s}_{i}, {T}_{i}\right)$
wobei *Tᵢ* der Transformationsparameter ist; 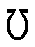 der Index des Stereobildpaares ist;
*Eᵤ*(***t**ᵢ*,**s***ᵢ*,*Hᵢ*) den euklidischen Abstand bezeichnet, der wie folgt dargestellt werden kann: ${E}_{u} \left({t}_{i}, {s}_{i}, {T}_{i}\right) = {\left‖P\left({t}_{i}\right)-S\left({s}_{i}, {T}_{i}\right)\right‖}_{2}^{2}$
wobei *P*(**t***ᵢ*) die Intensität des Unterblocks **t***ᵢ* im niedrigauflösenden Bild ist; *S*(***s**ᵢ,Tᵢ*) die Intensität des Unterblocks **s***ᵢ* im hochauflösenden Bild ist;
ein Parametertransformations-Berechnungsmodul, das dazu eingerichtet ist, den Transformationsparameter *Tᵢ* gemäß der Kostenfunktion zu berechnen, umfassend:
Erfassen der isomorphen Abbildung **H***_{mᵢ}* zur Rektifizierung der Ebenen im Bild, wobei die drei Vektoren von **H***_{mᵢ}* als **h**₁,**h**₂,**h**₃ bezeichnet werden und der Ziel-Unterblock ${t}_{i}^{′}$ im niedrigauflösenden Bild sowie der rektifizierte Quell-Unterblock ${s}_{i}^{′}$ im hochauflösenden Bild bezeichnet werden als: ${t}_{i}^{′} = {\left[{h}_{1}{t}_{i},{h}_{2}{t}_{i},{h}_{3}{t}_{i}\right]}^{T}$ ${s}_{i}^{′} = {\left[{h}_{1}{s}_{i},{h}_{2}{s}_{i},{h}_{3}{s}_{i}\right]}^{T}$
Annehmen, dass (*d^{x},d^{y}*) der Verschiebungsvektor des rektifizierten Quell-Unterblocks ${s}_{i}^{′}$ vom Zielraum in den rektifizierten Raum ist; der rektifizierte Quell-Unterblock ${s}_{i}^{′}$ wird ausgedrückt durch ${s}_{i}^{′} = \left[\begin{matrix}{h}_{1} + {h}_{3} {d}^{x} \\ {h}_{2} + {h}_{3} {d}^{x} \\ {h}_{3}\end{matrix}\right] {t}_{i}$
wobei der Quell-Unterblock **s***ᵢ* im hochauflösenden Bild dargestellt wird durch ${s}_{i} = {H}_{{m}_{i}}^{- 1} {s}_{i}^{′} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right] {t}_{i}$
wobei *Tᵢ* bezeichnet wird durch ${T}_{i} = {H}_{{m}_{i}}^{- 1} - \left[\begin{matrix}{h}_{1} + {h}_{3} {d}^{x} \\ {h}_{2} + {h}_{3} {d}^{x} \\ {h}_{3}\end{matrix}\right]$
und ein Einfügemodul, das dazu eingerichtet ist, die Hochfrequenzinformation des hochauflösenden Bildes in die Hochfrequenzinformation des niedrigauflösenden Bildes gemäß dem Transformationsparameter *Tᵢ* einzufügen.

## Revendications

1. Un procédé de reconstruction à super-résolution des images stéréoscopiques hétérogènes, **caractérisé en ce qu'**il comprend :
acquérir une paire d'images stéréoscopiques à un certain moment, compressées par une méthode de compression asymétrique dans un système de vision binoculaire, et cette paire d'images stéréoscopiques comprend deux vues : soit une image en haute résolution et une image en basse résolution ;
réduire la zone de recherche de l'image en haute résolution et la zone de recherche de l'image en basse résolution ;
déterminer respectivement les informations de haute fréquence de l'image en haute résolution à partir de sa zone de recherche, et les informations de haute fréquence de l'image en basse résolution à partir de sa zone de recherche ; et
coller les informations à haute fréquence de l'image en haute résolution dans les informations à haute fréquence de l'image en basse résolution par transformation paramétrique.

2. Procédé de reconstruction à super-résolution des images stéréoscopiques hétérogènes selon la revendication 1, dans lequel la zone de recherche de l'image en haute résolution et la zone de recherche de l'image en basse résolution sont réduites en utilisant une méthode de détection de contours.

3. Procédé de reconstruction à super-résolution des images stéréoscopiques hétérogènes selon la revendication 2, dans lequel la zone de recherche de l'image en haute résolution et la zone de recherche de l'image en basse résolution sont réduites par les étapes ci-dessous :
convoluer l'image en haute résolution et l'image en basse résolution avec un filtre gaussien pour obtenir une image en haute résolution débruitée et une image en basse résolution débruitée ;
calculer respectivement l'intensité du gradient G et la direction *θ* de l'image en haute résolution débruitée et de l'image en basse résolution débruitée ;
calculer respectivement les contours bruts de l'image en haute résolution et les contours bruts de l'image en basse résolution en fonction de l'intensité du gradient G et de la direction *θ* de l'image en haute résolution débruitée et de l'intensité du gradient G et de la direction *θ* de l'image en basse résolution débruitée ;
utiliser une méthode de suppression non maximale pour rendre parcimonieux les contours bruts de l'image en haute résolution et les contours bruts de l'image en basse résolution, afin d'obtenir leurs contours parcimonieux ; et
supprimer les pixels faibles des contours parcimonieux selon les seuils haut et bas prédéfinis afin d'obtenir des contours idéaux, et déterminer respectivement la zone de recherche de l'image en haute résolution et la zone de recherche de l'image en basse résolution en fonction des contours idéaux.

4. Procédé de reconstruction à super-résolution des images stéréoscopiques hétérogènes selon la revendication 1, dans lequel, une méthode de traitement sélectif par blocs est utilisée pour déterminer respectivement les informations de haute fréquence de l'image en haute résolution à partir de sa zone de recherche, et les informations de haute fréquence de l'image en basse résolution à partir de sa zone de recherche.

5. Procédé de reconstruction à super-résolution des images stéréoscopiques hétérogènes selon la revendication 4, dans lequel les informations à haute fréquence de l'image en haute résolution et les informations à haute fréquence de l'image en basse résolution sont déterminées par les étapes ci-dessous :
diviser respectivement la zone de recherche de l'image en haute résolution et la zone correspondante de l'image en basse résolution qui correspond à la zone de recherche de l'image en haute résolution en N sous-blocs, ${\left\{{s}_{i}\right\}}_{i = 1}^{N}$ et ${\left\{{t}_{i}\right\}}_{i = 1}^{N}$;
utiliser cinq opérateurs de gradient pour extraire les vecteurs caractéristiques de gradient de chaque sous-bloc, s*ᵢ* et t*ᵢ*, dans lequel, ces cinq opérateurs de gradient sont exprimés comme : ${f}_{1} = \left[-1,0,1\right]$ ${f}_{2} = {f}_{1}^{T}$ ${f}_{3} = \left[1,0,-2,0,1\right]$ ${f}_{4} = {f}_{3}^{T}$ ${f}_{5} = \left[1,0,-1;-1,0,1\right]$
les vecteurs caractéristiques de gradient extraits par les cinq opérateurs de gradient sont notés comme *fₓ,f_{y},fₓₓ,f_{yy}* et f*_{xy}*;
calculer la différence de caractéristiques *Dᵢ* de chaque sous-bloc *sᵢ* et *tᵢ* en fonction des vecteurs caractéristiques de gradient extraits, où la différence de caractéristiques *Dᵢ* est donnée par : ${D}_{i} = \left|\left|{f}_{i}^{ε}\right|-\left|{f}_{i}^{η}\right|\right|$ où ${f}^{ε} = \frac{{f}_{x}^{2} {f}_{xx} + 2 {f}_{x} {f}_{y} {f}_{xy} + {f}_{y}^{2} {f}_{yy}}{{f}_{x}^{2} + {f}_{y}^{2}}$ ${f}^{η} = \frac{{f}_{y}^{2} {f}_{xx} + 2 {f}_{x} {f}_{y} {f}_{xy} + {f}_{x}^{2} {f}_{yy}}{{f}_{x}^{2} + {f}_{y}^{2}}$
mettre toutes les différences de caractéristiques en ordre de taille afin d'obtenir une séquence ; le sous-bloc correspondant à la différence de caractéristique située au milieu de la séquence est le sous-bloc contenant les informations à haute fréquence.

6. Procédé de reconstruction à super-résolution des images stéréoscopiques hétérogènes selon la revendication 1, dans lequel les informations à haute fréquence de l'image en haute résolution sont collées aux informations à haute fréquence de l'image en basse résolution par transformation paramétrique, comprenant :
acquérir une fonction de coût qui est donnée par : $\left({t}_{i}, {s}_{i}\right) = {argmin}_{{t}_{i} , {s}_{i}} {\sum }_{i ∈ ℧} {E}_{u} \left({t}_{i}, {s}_{i}, {T}_{i}\right)$
*Tᵢ* est le paramètre de transformation ; 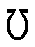 est l'indice de la paire d'images stéréoscopiques ; *Eᵤ*(***t**ᵢ,**s**ᵢ,Hᵢ*) indique la distance euclidienne, qui peut être représentée par : ${E}_{u} \left({t}_{i}, {s}_{i}, {T}_{i}\right) = {\left‖P\left({t}_{i}\right)-S\left({s}_{i}, {T}_{i}\right)\right‖}_{2}^{2}$
où *P*(**t***ᵢ*) est l'intensité du sous-bloc **t***ᵢ* dans l'image en basse résolution ; et *S*(*sᵢ,Tᵢ*) est l'intensité du sous-bloc **s***ᵢ* dans l'image en haute résolution ;
calculer le paramètre de transformation *Tᵢ* selon la fonction de coût, qui comprend :
acquérir la carte isomorphique, **H***_{mᵢ}*, utilisée pour rectifier les sous-blocs dans la paire d'images, dans lequel, les trois vecteurs de **H***_{mᵢ}* sont notés comme **h**₁,**h**₂,**h**₃, et le sous-bloc cible ${t}_{i}^{′}$ dans l'image en basse résolution et le sous-bloc source rectifié ${s}_{i}^{′}$ dans l'image en haute résolution sont notés comme ${t}_{i}^{′} = {\left[{h}_{1}{t}_{i},{h}_{2}{t}_{i},{h}_{3}{t}_{i}\right]}^{T}$ ${s}_{i}^{′} = {\left[{h}_{1}{s}_{i},{h}_{2}{s}_{i},{h}_{3}{s}_{i}\right]}^{T}$
supposer que (*d^{x}*,*d^{y}*) est le vecteur de déplacement du sous-bloc source rectifié ${s}_{i}^{′}$ de l'espace cible à l'espace rectifié ; Le sous-bloc source rectifié ${s}_{i}^{′}$ est exprimé par ${s}_{i}^{′} = \left[\begin{matrix}{h}_{1} + {h}_{3} {d}^{x} \\ {h}_{2} + {h}_{3} {d}^{x} \\ {h}_{3}\end{matrix}\right] {t}_{i}$
le sous-bloc source **s***ᵢ* dans l'image en haute résolution est représenté par ${s}_{i} = {H}_{{m}_{i}}^{- 1} {s}_{i}^{′} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right] {t}_{i}$
*Tᵢ* est noté par ${T}_{i} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right]$
coller les informations à haute fréquence de l'image en haute résolution dans les informations à haute fréquence de l'image en basse résolution selon paramètre de transformation *Tᵢ*.

7. Un système de reconstruction à super-résolution des images stéréoscopiques hétérogènes, **caractérisé en ce qu'**il comprend :
un module d'acquisition configuré pour acquérir une paire d'images stéréoscopiques à un certain moment, compressées par une méthode de compression asymétrique dans un système de vision binoculaire, cette paire d'images stéréoscopiques comprend deux vues : soit une image en haute résolution et une image en basse résolution ;
un module de réduction configuré pour réduire la zone de recherche de l'image en haute résolution et la zone de recherche de l'image en basse résolution ;
un module de détermination configuré pour déterminer respectivement les informations de haute fréquence de l'image en haute résolution à partir de sa zone de recherche, et les informations de haute fréquence de l'image en basse résolution à partir de sa zone de recherche ;
un module de traitement configuré pour coller les informations à haute fréquence de l'image en haute résolution dans les informations à haute fréquence de l'image en basse résolution par transformation paramétrique.

8. Système de reconstruction à super-résolution des images stéréoscopiques hétérogènes selon la revendication 7, dans lequel le module de réduction utilise une méthode de détection de contours pour réduire la zone de recherche de l'image en haute résolution et la zone de recherche de l'image en basse résolution, cette méthode comprend :
un module de débruitage configuré pour convoluer l'image en haute résolution et l'image en basse résolution avec le filtre gaussien pour obtenir une image en haute résolution débruitée et une image en basse résolution débruitée ;
un premier module de calcul configuré pour calculer respectivement l'intensité du gradient G et la direction *θ* de l'image en haute résolution débruitée et de l'image en basse résolution débruitée ;
un deuxième module de calcul configuré pour calculer respectivement les contours bruts de l'image en haute résolution et de l'image en basse résolution en fonction de l'intensité du gradient G et de la direction *θ* de l'image en haute résolution débruitée et de l'intensité du gradient G et de la direction *θ* de l'image en basse résolution débruitée ;
un module d'éparcissement des contours configuré pour rendre parcimonieux les contours bruts de l'image en haute résolution et les contours bruts de l'image en basse résolution en utilisant une méthode de suppression non maximale afin d'obtenir leurs contours parcimonieux ;
un module de suppression configuré pour supprimer les pixels faibles des contours parcimonieux selon les seuils haut et bas prédéfinis afin d'obtenir des contours idéaux, et déterminer respectivement la zone de recherche de l'image en haute résolution et la zone de recherche de l'image en basse résolution en fonction des contours idéaux.

9. Système de reconstruction à super-résolution des images stéréoscopiques hétérogènes selon la revendication 7, dans lequel, le module de détermination détermine respectivement les informations à haute fréquence de l'image en haute résolution à partir de la zone de recherche de l'image en haute résolution et les informations à haute fréquence de l'image en basse résolution à partir de la zone de recherche de l'image en basse résolution en utilisant une méthode de traitement sélectif par blocs ; le module de détermination comprend :
un module de segmentation configuré pour diviser respectivement la zone de recherche de l'image en haute résolution et la zone correspondante de l'image en basse résolution qui correspond à la zone de recherche de l'image en haute résolution en N sous-blocs, ${\left\{{s}_{i}\right\}}_{i = 1}^{N}$ et ${\left\{{t}_{i}\right\}}_{i = 1}^{N}$ ;
un module d'extraction configuré pour extraire les vecteurs caractéristiques de gradient de chaque sous-bloc, s*ᵢ* et t*ᵢ*, en utilisant cinq opérateurs de gradient, dans lequel, ces cinq opérateurs de gradient sont exprimés comme : ${f}_{1} = \left[-1,0,1\right]$ ${f}_{2} = {f}_{1}^{T}$ ${f}_{3} = \left[1,0,-2,0,1\right]$ ${f}_{4} = {f}_{3}^{T}$ ${f}_{5} = \left[1,0,-1;-1,0,1\right]$
les vecteurs caractéristiques de gradient extraits par les cinq opérateurs de gradient sont notés comme *fₓ,f_{y},fₓₓ,f_{yy}* et f*_{xy}* ;
un module de calcul de différence de caractéristiques configuré pour calculer la différence de caractéristiques *Dᵢ* de chaque sous-bloc s*ᵢ* et t*ᵢ* en fonction des vecteurs caractéristiques de gradient extraits, où la différence de caractéristiques *Dᵢ* est donnée par : ${D}_{i} = \left|\left|{f}_{i}^{ε}\right|-\left|{f}_{i}^{η}\right|\right|$ où ${f}^{ε} = \frac{{f}_{x}^{2} {f}_{xx} + 2 {f}_{x} {f}_{y} {f}_{xy} + {f}_{y}^{2} {f}_{yy}}{{f}_{x}^{2} + {f}_{y}^{2}}$ ${f}^{η} = \frac{{f}_{y}^{2} {f}_{xx} + 2 {f}_{x} {f}_{y} {f}_{xy} + {f}_{x}^{2} {f}_{yy}}{{f}_{x}^{2} + {f}_{y}^{2}}$
un module de détermination des informations à haute fréquence configuré pour mettre toutes les différences de caractéristiques en ordre de taille afin d'obtenir une séquence ; le sous-bloc correspondant à la différence de caractéristique située au milieu de la séquence est le sous-bloc contenant les informations à haute fréquence.

10. Système de reconstruction à super-résolution des images stéréoscopiques hétérogènes selon la revendication 7, dans lequel le module de traitement comprend :
un module d'acquisition de fonction configuré pour obtenir une fonction de coût ; la fonction de coût est donnée par : $\left({t}_{i}, {s}_{i}\right) = {arg min}_{{t}_{i} , {s}_{i}} {\sum }_{i ∈ ℧} {E}_{u} \left({t}_{i}, {s}_{i}, {T}_{i}\right)$
*Tᵢ* est le paramètre de transformation ; 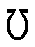 est l'indice de la paire d'images stéréoscopiques ; *Eᵤ*(**t***ᵢ,***s***ᵢ,Hᵢ*) indique la distance euclidienne, qui peut être représentée par : ${E}_{u} \left({t}_{i}, {s}_{i}, {T}_{i}\right) = {\left‖P\left({t}_{i}\right)-S\left({s}_{i}, {T}_{i}\right)\right‖}_{2}^{2}$
où *P*(**t***ᵢ*) est l'intensité du sous-bloc **t***ᵢ* dans l'image en basse résolution ; et *S*(**s***ᵢ*,*Tᵢ*) est l'intensité du sous-bloc **s***ᵢ* dans l'image en haute résolution ;
un module de calcul de transformation paramétrique configuré pour calculer le paramètre de transformation *Tᵢ* selon la fonction de coût, qui comprend :
acquérir la carte isomorphique **H***_{mᵢ}* pour rectifier les plans dans l'image, dans lequel, les trois vecteurs de **H***_{mᵢ}* sont notés comme **h**₁,**h**₂,**h**₃, et le sous-bloc cible ${t}_{i}^{′}$ dans l'image en basse résolution et le sous-bloc source rectifié ${s}_{i}^{′}$ dans l'image en haute résolution sont notés comme ${t}_{i}^{′} = {\left[{h}_{1}{h}_{i},{h}_{2}{t}_{i},{h}_{3}{t}_{i}\right]}^{T}$ ${s}_{i}^{′} = {\left[{h}_{1}{s}_{i},{h}_{2}{s}_{i},{h}_{3}{s}_{i}\right]}^{T}$
supposer que (*d^{x},d^{y}*) est le vecteur de déplacement du sous-bloc source rectifié ${s}_{i}^{′}$ de l'espace cible à l'espace rectifié ; Le sous-bloc source rectifié ${s}_{i}^{′}$ est exprimé par ${s}_{i}^{′} = \left[\begin{matrix}{h}_{1} + {h}_{3} {d}^{x} \\ {h}_{2} + {h}_{3} {d}^{x} \\ {h}_{3}\end{matrix}\right] {t}_{i}$
le sous-bloc source **s***ᵢ* dans l'image en haute résolution est représenté par ${s}_{i} = {H}_{{m}_{i}}^{- 1} {s}_{i}^{′} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right] {t}_{i}$
*Tᵢ* est noté par ${T}_{i} = {H}_{{m}_{i}}^{- 1} \left[\begin{matrix}{h}_{1} + {h}_{3} {d}^{x} \\ {h}_{2} + {h}_{3} {d}^{x} \\ {h}_{3}\end{matrix}\right]$
un module de collage configuré pour coller les informations à haute fréquence de l'image en haute résolution dans les informations à haute fréquence de l'image en basse résolution selon le paramètre de transformation *Tᵢ*.
